# EUROPEAN PATENT SPECIFICATION

(11) **EP 3 068 662 B1**
(45) Date of publication and mention of the grant of the patent: **24.10.2018**
(21) Application number: 14861904.2
(22) Date of filing: 13.11.2014
(51) Int. Cl.: B60N 2/90, B60N 2/28, B60N 2/885

(54) **ARRANGEMENT IN A VEHICLE SEAT**
ANORDNUNG IN EINEM FAHRZEUGSITZ
AGENCEMENT DANS UN SIÈGE DE VÉHICULE

(30) Priority: 14.11.2013 FI 20136118
(43) Date of publication of application: 21.09.2016
(73) Proprietor: Clepps OY, 40250 Jyväskylä (FI)
(72) Inventor: LIUSKA, Markku, FI-40250 Jyväskylä (FI)
(74) Representative: Helke, Kimmo Kalervo
(86) International application number: PCT/FI2014/050856
(87) International publication number: WO 2015/071542

(56) References cited:
- EP-A1- 0 644 082
- EP-A1- 0 644 082
- DE-A1- 4 442 027
- DE-A1- 4 442 027
- US-A- 2 658 559
- US-A- 3 012 819
- US-A- 3 012 819
- US-A- 4 904 021
- US-A1- 2010 289 315
- US-B1- 6 267 441

## Description

The invention is related to an arrangement in a vehicle seat, in which arrangement a support device is fitted in connection with a vehicle seat, the support device includes a support element and fastening devices, with which the support element is fastened in connection with a backrest included in the seat, and which support element being arranged as a lateral support, and the fastening devices include anchoring members at both ends of the support element.

A seat of a vehicle, such as a car, is dimensioned for an adult. The seat belt is also dimensioned for an adult. Thus, various support devices exist for transporting children safely, for example, and these devices are arranged in a seat included in a vehicle. At first, children are transported in child restraints, in which they are mainly in a recumbent position. Children who have already learnt to sit can travel in child safety seats, to which they are fastened using the seat belt of the child safety seat. Correspondingly, the child safety seat is fastened to the vehicle using the seat belt of the vehicle or other fasteners. According to the current recommendations, children under the age of four should travel in rear-facing child safety seats. After abandoning the child safety seat, the seat belt of the vehicle together with a seat cushion or a booster seat can be used, in which case the child normally travels facing forward. Since booster seats are not provided with separate seat belts, the booster seat and the child are fastened with the seat belt of the vehicle.

Installing a child safety seat is a laborious task. In addition, maintaining the child safety seat in place is unreliable. Many child safety seats also require a great amount of space, which decreases the comfort of the co-passengers. A child safety seat that is not currently in use occupies a large part of the boot space if the child safety seat is carried along in the vehicle. Furthermore, a wide child safety seat may interfere with a door handle, for example, in which case the child safety seat must be disadvantageously placed laterally offset from the seat. The support provided by the seat cushion and most booster seats is inadequate. In addition, most booster seats quickly become too small. Because of the backrest, a booster seat requires space almost as much as a child safety seat equipped with a seat belt.

EP application publication No. 0667256 proposes a support device designed for a child. The support device has a rigid tubular frame surrounded by an additional cushion formed of plastic material. The tubular frame includes a belt arrangement, with which the support device is secured to the seat backrest. The support device is massive and heavy. In addition, its installation is difficult and maintaining it in place is unreliable. Particularly, the lateral support provided by the support device is inadequate, and the support device completely lacks possibilities for adjusting the support.

US patent No. 4904021 proposes a soft and flexible lateral support, which is pushed in between the seat backrest and the seat cushion. Maintaining the lateral support fastened is unreliable and the lateral support effect achieved is also otherwise inadequate. DE patent application No. 4442027 discloses a support fixed to a car seat for a small child according to the preamble of claim 1.

The object of the invention is to provide a novel arrangement in a vehicle seat, which suits passengers of various sizes and different seats. The characteristic features of the arrangement according to this invention become apparent from the appended claims. The support device included in the arrangement according to the invention can be adapted to fit in various seats and it takes little space. In addition, the support device is easy to install and remove and the dimensions and profiles of the support device can be easily adjusted. The support device is also suitable for use with a seat cushion and an integrated
child safety seat. With the arrangement, good support is easily achieved for the passenger particularly in the lateral direction.

The invention is described below in detail by referring to the appended drawings, which illustrate some of the embodiments of the invention, in which:
- Figure 1a: shows a lateral view of a support device of the arrangement according to the invention fitted in a vehicle,
- Figure 1b: shows a top view of the vehicle according to Figure 1a,
- Figure 1c: shows a partial enlargement of Figure 1b,
- Figure 2a: shows a view of a separate seat equipped with a support device according to the invention in principle,
- Figure 2b: shows a lateral view of a support device according to the invention in principle,
- Figure 2c: shows a second embodiment of a support device according to the invention as shown in Figure 2b,
- Figure 3a: shows a front view of a support device according to the invention in principle,
- Figure 3b: shows a front view of a partial enlargement of a support device according to the invention,
- Figure 3c: shows a support component included in the support device according to the invention, with its parts disassembled,
- Figure 3d: shows a modification of the support component according to the invention,
- Figure 4: shows the arrangement according to the invention,
- Figure 5a: shows a partial enlargement of Figure 2a,
- Figure 5b: shows the fastening system for the upper part of a support device according to the invention,
- Figure 5c: shows a modification of the fastener of Figure 5b,
- Figure 6: shows two support devices for forming an arrangement according to the invention,
- Figure 7a: shows an oblique front view of a support device according to the invention,
- Figure 7b: shows an oblique rear view of the support device according to Figure 7a.

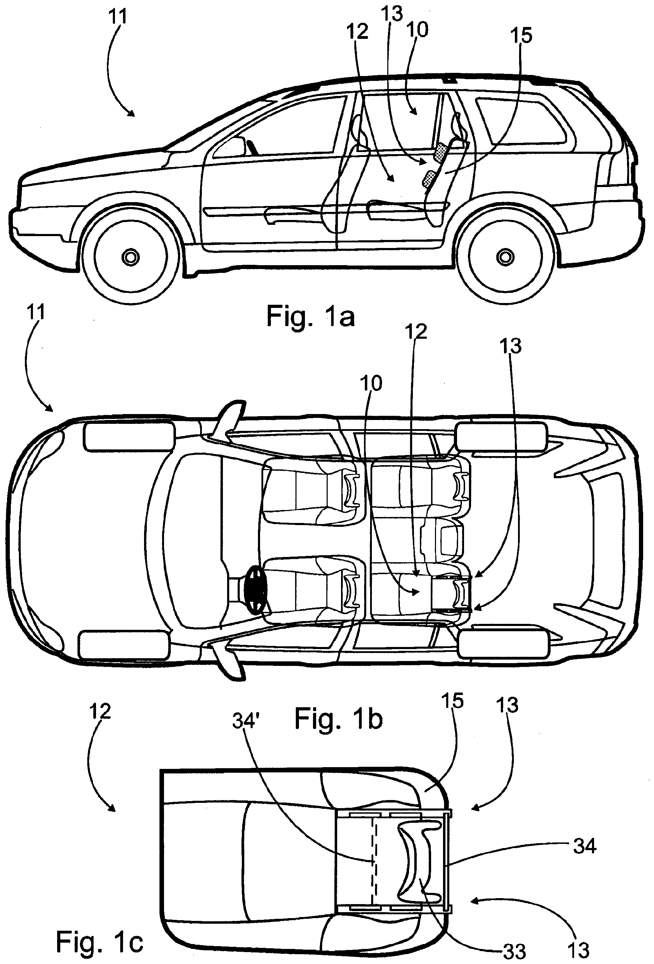

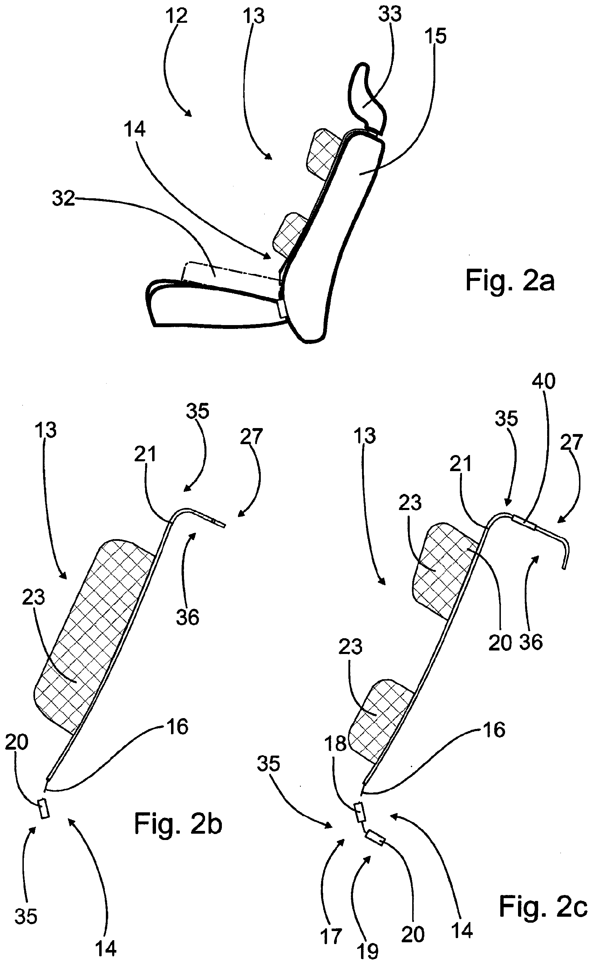

Figures 1a and 1b illustrate a support device 10 for a vehicle seat included in the arrangement according to the invention. The vehicle is here a saloon car, but it can also be any car, a train or an aeroplane. The support device provides additional support for the passenger, increasing safety and travel comfort. Generally, the support device 10 is designed to be fitted in connection with a seat 12 included in a vehicle 11 (Figures 1a, 1b and 1c). The support device 10 includes a support element 13 and fastening devices 14 for fastening the support element 13 in connection with the backrest 15 included in the seat 12 (Figure 2a). Here, the support element 13 is arranged as a lateral support. In addition, the fastening devices 14 include anchoring members 35 at both ends of the support element 13. Firstly, the support element abuts on the backrest, whereby a good support is achieved without any extra constructions. Secondly, the support element can be tightly and reliably secured to the seat with the fastening devices. Thus, separate fasteners are not necessary and, at the same time, the need of forming integral additional constructions in the vehicle is avoided. Thirdly, the lateral support achieved is substantial without massive and heavy constructions.

In the embodiment of Figures 2b and 2c, the fastening devices 14 include a flexible fastening element 16 provided with adjustment elements 17 for varying the length of the fastening element 16. In Figures 2b and 2c, the fastening element 16 is formed, like in a seat belt, of a fabric ribbon, which has good tensile strength but is still flexible and is equipped with an adjustment buckle 18.

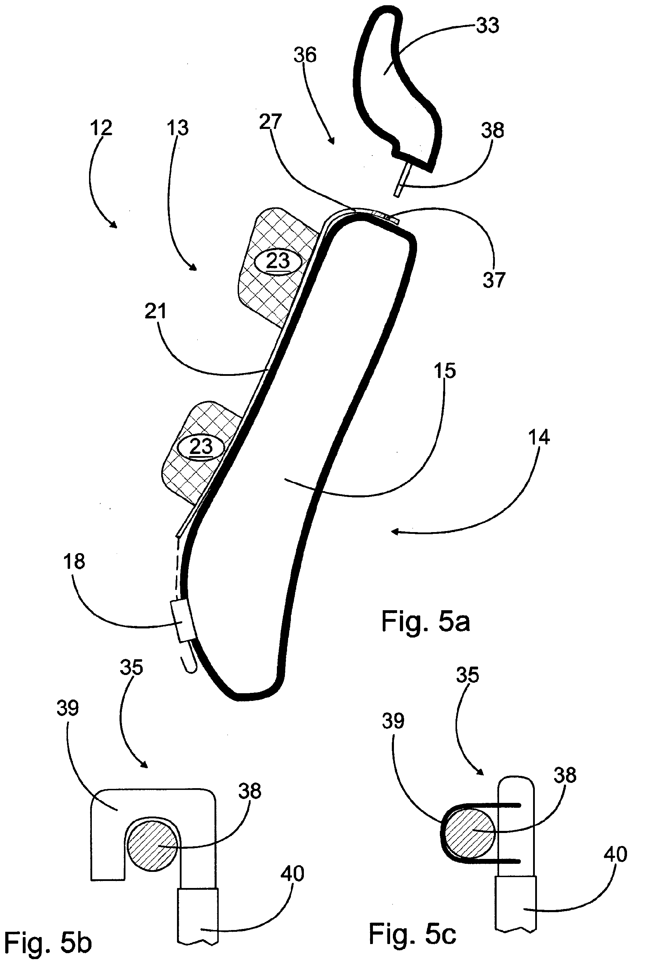

In the embodiments of Figures 2a to 2c, the anchoring member 35 is composed of a fastening profile 36 conforming to the shape of the backrest 15. In the embodiment of Figure 2c, the fastening profile 36 is composed of a curved support element 13, which leans against the backrest 15. Other anchoring members are shown in Figures 5a-5c and will be discussed below. These are anchoring members for the upper part of the support element.

In one embodiment of the invention, the anchoring member 35 for the lower part of the support element is composed of an anchoring member 19 according to ISO standard No. 13216 (Figure 2c). The product name of the fastening system using this anchoring member is *Isofix*®. In the lower part of the backrest, in the gap between the seat cushion and the back cushion, the fastening system is provided with two standard size links (not shown), in which a quick-release lock 20 forming the anchoring member fitted in the fabric ribbon can be engaged. Instead of a quick-release lock, a hook or another equivalent construction can be used. Here, the above-mentioned adjustment buckles 18 are located after the quick-release locks 20. In the embodiment proposed, the need of threading is avoided when the upper part of the support element is first placed in the upper part of the backrest and the quick-release locks are engaged, after which the fabric ribbon is tightened to the final tension acting on the adjustment buckles. On the other hand, the adjustment buckles can be used to first adjust a suitable length for the fabric ribbon, engaging the quick-release locks to the links only after this. The adjustment buckle can also be located in another position in the fabric ribbon.

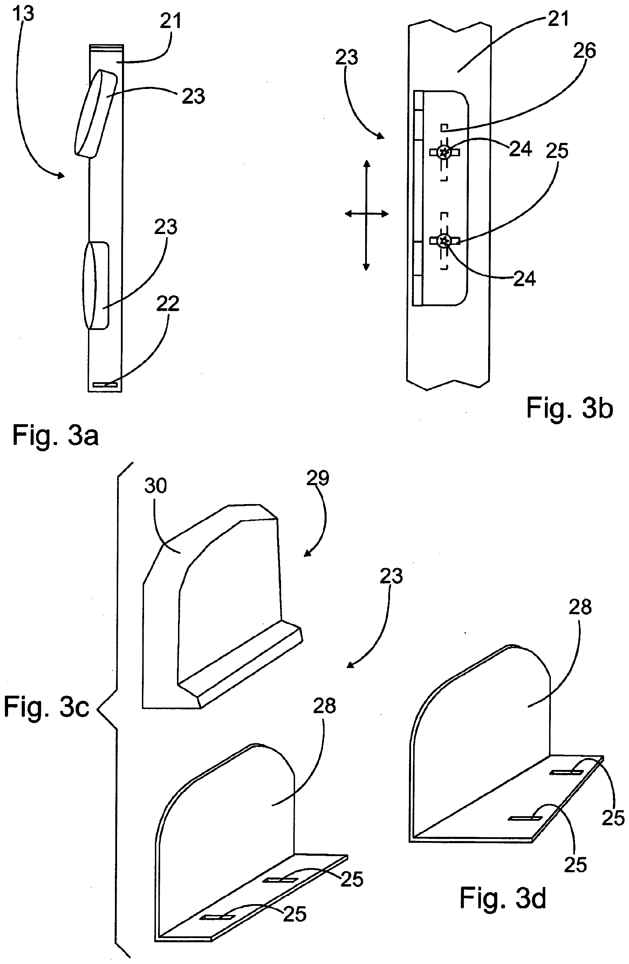

Figure 3a is a front view of the mere support element 13, which includes an elongated frame construction 21. Thus, the support element occupies little space, however, extending essentially over the entire length of the backrest. A slot 22 is provided at the lower end of the frame construction 21 for the fastening element. In addition, one or more support components 23 are arranged in the frame construction. These support components thus extend outwards from the backrest plane forming a comprehensive support particularly in the lateral direction. Here, two sets of support components are shown, of which the lower ones mainly support the body of the passenger and the upper ones support the head of the passenger. In this first embodiment, the support component is adjustably fixed. Due to its adjustability, the support device can be adapted to suit each passenger. The adjustability can be implemented in different methods. Here, the support components are fastened to the support element with screws 24, which are set in both the longitudinal and cross-directional gaps (Figure 3b). The cross-directional gap 25 is in the support component 23 and the longitudinal gap 26 is in the frame construction 21. Thus, by loosening the screws, the support component can be moved relative to the frame construction in two different directions, which enables setting the support component in the desired position in the vertical and lateral directions. The gaps also enable rotating the support component for some degrees. The gaps can also be implemented in such a way that the cross-directional gap is in the frame construction and the longitudinal gap is in the support component.

The support component can also be integrally fixed. The support component may even be formed of the basic material of the frame construction by bending, for example. Casting techniques can also be applied, in which case the frame construction and at least part of the support components form a monolithic component. Different methods can also be applied in the same support device. For example, it is possible to form a cast component by bending and fasten adjustable support components, for instance. The support component can also be produced by bending or casting or with another suitable method.

In Figure 2b, one support component 23, which is longer than the support components described above, is fastened to the frame construction 21. Advantageously, the frame component is essentially identical in all of the embodiments, which allows using the same fastening points for fastening the support components regardless of the embodiment. Thus, the support component of Figure 2c is fastened with three screws. For example, the support devices proposed can also be used connected to the front seat to provide additional lateral support for an adult as well, if required. Good lateral support is also provided for the body of an adult particularly with the embodiment of Figure 2b.

The frame construction can be made of different materials. Advantageously, sufficiently rigid plastic is used, which is sufficiently solid for holding the support components but, on the other hand, slightly flexible to conform to the shape of the backrest. In addition, plastic does not feel uncomfortable in cold conditions and does not create hazards in case of a collision. Plastic can be easily formed as is shown in Figures 2b and 2c. Here, a hook 27 leaning against the upper part of the backrest is additionally formed in the upper part of the frame construction 21. The hook can also be arranged with varying dimensions, which enables adjusting the hook according to each backrest.

Figure 3c illustrates the construction of the support component 28 in more detail. Here, the support component 23 includes a rigid inner part 28 and a cover 30 adapted as a cushion 29. In Figure 3c, the cover 30 is shown detached from the circumference of the inner part 28. For example, the inner part can be made of the same material as the frame construction. However, other materials can also be used. In the embodiment proposed, the corners and edges of the support component are additionally rounded to ensure comfort and safety during use. The support component is provided with a cushioning cover, which is advantageously made of a comfortable yet wear-resistant fabric, such as velour or *Alcantara*®, or another suitable material. Leather is also a suitable material, and the material of the cover is advantageously the same as the seat cover. Advantageously, the cover is detachable, in which case the support components are easily adjustable and the covers can be washed provided that the material selected is suitable.

The support components can be identical. Figure 3d shows a modification of the support component 28, which is particularly suitable for use as the upper support component. The upper flange of the support component being triangular, the other flange can be placed obliquely relative to the frame construction (Figure 3a). Thus, good support is achieved for the passenger's head. For example, it is possible to sleep without the head flopping down.

In the arrangement according to the invention, a support device 10 is fitted in connection with a seat 12 of a vehicle 11. The support device 10 includes a support element 13 and fastening devices 11, with which the support element 13, arranged as a lateral support, is secured in connection with the backrest 15 included in the seat 12. In addition, the fastening devices 14 include anchoring members 35 at both ends of the support element 13. According to the invention, the arrangement includes two separate support devices 10, fitted at an interval of each other. Furthermore, the support devices 10 are mirror-like constructions. Correspondingly, the fastening devices 14 include a fastening element 16 provided with adjustment elements 17 for varying the length of the fastening element 16. Thus, the support element can be firmly fastened in connection with the backrest of the seat without additional fasteners or constructions. In addition, good lateral support is achieved with the support device. The support device can be fastened in connection with the seat, after which the length of the fastening element is adjusted as desired with the adjustment elements. In practical use, the fabric ribbon is tightened to final tension. On the other hand, it is possible to first adjust a suitable length for the fabric ribbon and only then engage the anchoring member.

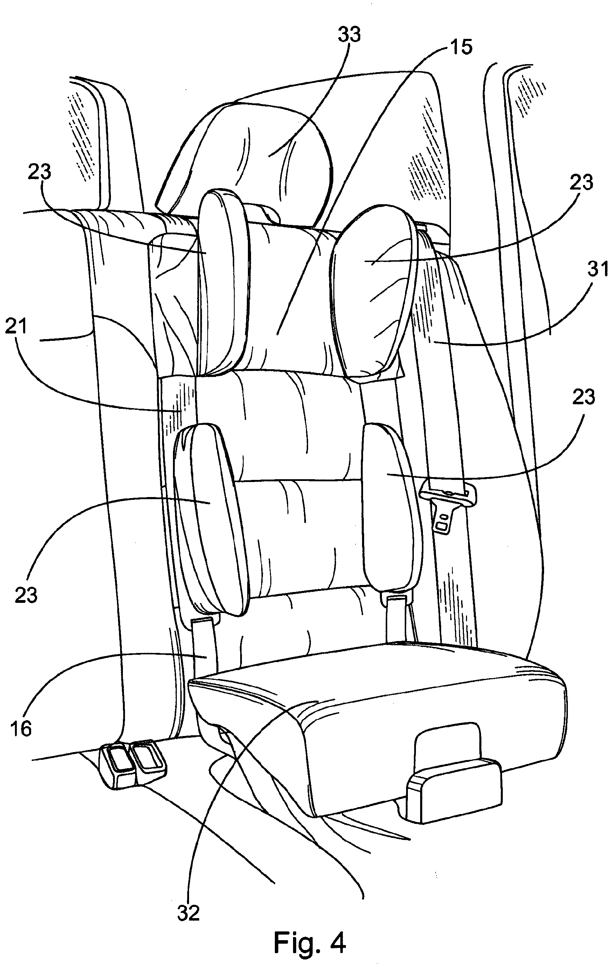

The arrangement thus includes two support devices 10, separate from each other, which are fitted at an interval of each other independently of each other. Thus, both support devices can be fixed to desired positions achieving in this way suitable support for each user. On the other hand, the support devices can be connected to each other with a fabric ribbon, for example, in which case the headrest can be utilised for the fastening (Figures 1c and 5a to 5c). At the simplest, support devices 10 connected to each other at their upper ends with an adjustable connecting ribbon 34 are placed behind the headrest 33 and engaged with quick-release locks at their lower ends. Thus, the support devices can be installed and removed in a moment. Hence, the support devices can be used only when necessary without toil for their installation and removal. For example, during normal travelling, the support devices can be removed and only installed in place once the passenger falls asleep in order to maintain the passenger in the sitting position regardless of the sleep. An erect sitting position also keeps the seat belt of the vehicle in the correct position thus maximising travel comfort and safety. Figure 4 also shows the vehicle's own seat belt 31, provided with sufficient space to run between the support components 23. At the same time, the support components keep the seat belt in the correct position. The arrangement can also be provided with several connecting ribbons to maintain a constant distance between the support devices. In Figure 1c, another connecting ribbon 34' is illustrated by a broken line.

Advantageously, two support devices, identical with each other but with mirror-like constructions, are used in forming the arrangement. Thus, with identical adjustments, identical support effects are provided on both sides. At the same time, the distance between the support devices can be adjusted even more by changing the position of the support devices. The basic construction of the support components described above is an L form, the support component thus mainly extending to the side of the other edge of the frame construction. Therefore, depending on which side the support device is placed, the distance between the support components varies as much as five centimetres, even though the support components are fixed to the same positions in both cases. Fine adjustment can then be performed using the above-mentioned screws.

Additional support is often needed particularly for children when they outgrow their child safety seats and a booster seat is not available or purchasing one is not desired. More freedom exists for fastening the support device than before. Thus, for example, three suitably positioned support devices can provide seats equipped with additional supports for two passengers and there still remains space for one adult as a third passenger in the rear seat of a normal car. Alternatively, for example, six support devices can be used to adjust individual seats for three children in one and the same back seat. When the transportation needs change, the necessary number of support devices can be quickly removed, and narrow elongated support devices do not require much storage space.

The arrangement can be arranged in the seats of most vehicles. A particular advantage is achieved in seats equipped with a socalled integrated child safety seat. The seat cushion or backrest, or both, of such a seat include components, the location and position of which can be varied to make the seat suitable for a person of a different size. However, an integrated child safety seat completely lacks lateral support, at least in most of its positions. Now, with the arrangement according to the invention, sufficient lateral support is provided utilising, at the same time, the other characteristics of an integrated child safety seat. The support devices occupy so little space in the lateral direction that the space for adjacent passengers remains as large as it would be without the support devices.

According to Figure 2a, the arrangement may also include a seat cushion 32, which can be fastened to the fastening devices 14. Thus, the seat cushion is reliably maintained in the correct position. For the fastening devices, the seat cushion is provided with suitable openings or fastening links (not shown). In Figure 2, the seat cushion is illustrated by a dot-and-dash line. In Figure 4, the seat cushion 32 is an integral part of the seat.

Figure 5a shows in more detail an arrangement according to the invention, which has been even further modified. Here, the fastening profiles 36 include the above-mentioned hook 27. In addition, the fastening profiles 36 include an opening 37, dimensioned in such a way that the anchoring rod 38 of the headrest 33 fits through the opening. Thus, the frame construction 21 is firmly secured to the headrest 33 at its upper part. In Figures 5b and 5c, the fastening of the upper part to the anchoring rod 38 is illustrated in more detail; the dimensioning and the shape of the anchoring rod can vary from those shown. Here, the anchoring member 35 is formed of a fastener 39, which settles around the anchoring rod 38. The fastener 39 is here connected to the frame construction with a fitting element 40. Thus, various fasteners can be fixed to a frame construction of one type, which enables anchoring the support construction to different seats without compromising the firmness. The fitting element 40 is also shown in Figure 2c. Here, the fitting element 40 also determines the dimensions of the hook 27. In Figure 5c, the fastener 39 has two parts.

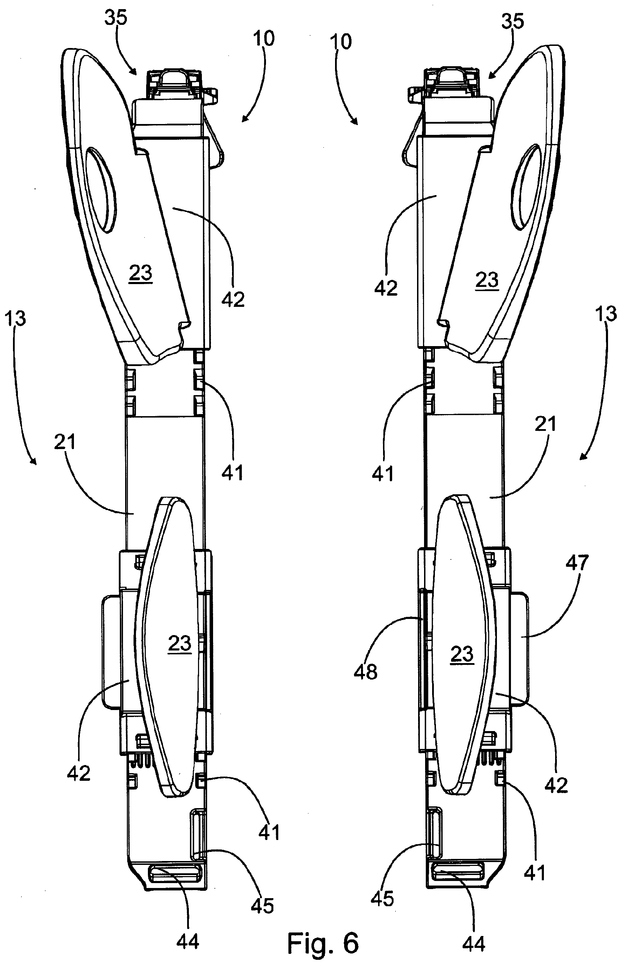

Figure 6 illustrates an arrangement composed of two support devices 10. Here, each frame construction 21 has two support components 23, which are form-locked to the frame construction 21. In other words, separate screws or locking devices are not necessary. In the embodiment shown, the form-lock includes several locking profiles 41, which conform to the shape of the support component 23 and are fitted at an interval of each other in the longitudinal direction of the frame construction 21. Here, the support component 23 is provided with a frame component 42, which is slightly wider than the frame construction 21, extending to both sides of the frame construction 21. The side flanges 43 thus formed have extensions, which lock into the locking profiles 41. Thus, the support component can be removed without tools and reconnected to the desired height.

The location of the support component 23 in the lateral direction of the frame construction 21 can also be arranged to be adjustable. In the embodiment of Figure 6, the upper support component 23 is integrated to the frame component 42. Instead, the lower support component 23 includes a plate-like extension 47, which slides in the gap 48 disposed in the cross direction of the frame component 42. In practical use, the support component 23 is first slid to the desired position in the frame component 42, after which the frame component 42 is form-locked into the frame construction 21. At the same time, the extension 47 locks between the frame component 42 and the frame construction 21, staying thus in place. When varying the lateral adjustment, the frame component is removed and the support component is slid to the desired direction and the frame component is form-locked in place.

Here, the length of the profiled hook 27 can again be adjusted without tools. Figure 6 also illustrates horizontal gaps 44 for the fastening element. Correspondingly, the vertical gaps 45 are for the connecting ribbon.

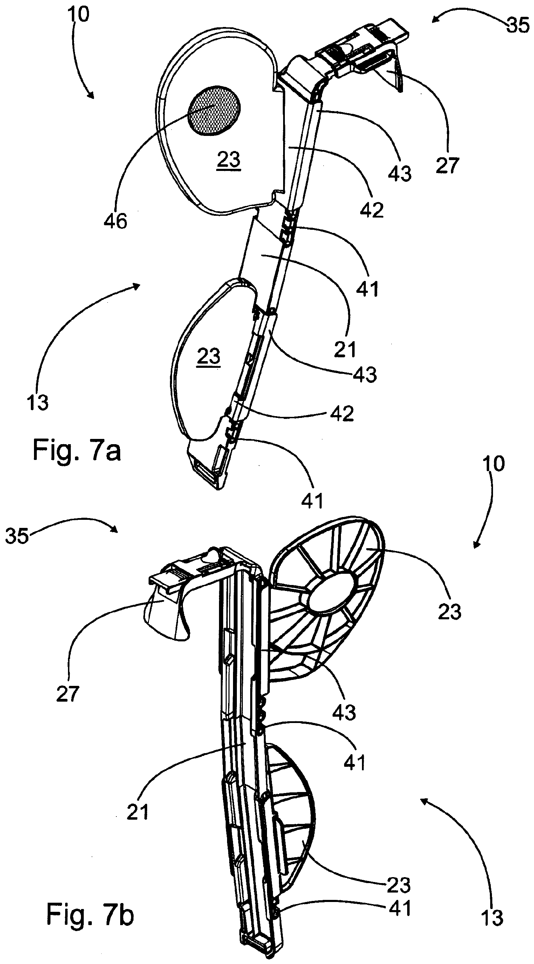

In Figures 7a and 7b, the support device 10 is illustrated seen from different directions. In the invention, the support component 23 has one or more loudspeakers 46. This increases travel comfort and enjoyment. The support component can also be provided with a microphone (not shown). In this case, the arrangement is suitable for many forms of communication. The necessary wires and connectors are not shown here. The same reference numbers are used for functionally identical parts.

The support device according to the invention has a simple design and is lightweight. Due to its adaptability, the support device can be easily installed in different vehicles without additional accessories. Both the support device and the individual support components can be removed, if considered unnecessary. In addition, the features of the support device can be adjusted by using different support components. The support component described above is an L-form support component; however, the support component can also be inclined. With the novel support device, different arrangements can be formed in a simple way without reducing the transportation capacity of the vehicle. The arrangement can also be easily removed and the support devices removed can be stored aboard.

## Claims

1. Arrangement in a vehicle seat, in which arrangement a support device (10) is fitted in connection with a seat (12) of a vehicle (11), and the arrangement includes two separate support devices (10), which are adapted at an interval of each other, and the support device (10) includes a support element (13) and fastening devices (14), with which the support element (13) is fastened in connection with a backrest (15) included in the seat (12), and the fastening devices (14) include a fastening element (16) provided with adjustment elements (17) for varying the length of the fastening element (16), and the support element (13) being arranged as a lateral support, and the support devices (10) are mirror-like constructions releasably fitted in connection with the seat (12), **characterised in that**, the fastening devices (14) include anchoring members (35) at both ends of the support element (13) including an elongated frame construction (21), and the anchoring member (35) for the lower part of the support element (13) is quick-releasable, and in the support element (13) two support components (23) are arranged; one support component for the head and another support component for the body of the passenger.

2. Arrangement according to claim 1, **characterised in that** the anchoring member (35) for the upper part of the support element (13) is composed of a fastening profile (36) conforming to the shape of the backrest (15).

3. Arrangement according to claim 1 or 2, **characterised in that** the anchoring member (35) for the lower part of the support element (13) is composed of an anchoring member (19) according to ISO standard No. 13216.

4. Arrangement according to any of claim 1 to 3, **characterised in that** the support components (23) are form-locked into the frame construction (21).

5. Arrangement according to claim 4, **characterised in that** the form-lock includes several locking profiles (41) conforming to the shape of the support component (23), fitted at an interval of each other in the longitudinal direction of the frame construction (21).

6. Arrangement according to any of claims 1 to 5, **characterised in that** the support component (23) includes a rigid inner part (28) and a cover (30) arranged as a cushion (29).

7. Arrangement according to any of claims 1 to 6, **characterised in that** the support component (23) is provided with one or more loudspeakers (46).

8. Arrangement according to any of claims 1 to 7, **characterised in that** the support component (23) is provided with a microphone.

9. Arrangement according to any of claims 1 to 8, **characterised in that** the arrangement includes a seat cushion (32), which is secured to the fastening devices (14).

10. Arrangement according to any of claims 1 to 9, **characterised in that** the support devices (10) are positioned independently of each other.

11. Arrangement according to any of claims 1 to 10, **characterised in that** the anchoring member (35) for the upper part of the support element (13) is composed of a fastener (39) conforming to the anchoring rod (38) of the headrest (33) included in the backrest (15).

12. Arrangement according to claim 11, **characterised in that** the anchoring member (35) for the upper part of the support element (13) includes a fitting element (40) for adapting the anchoring member (35) to the backrest.

13. Arrangement according to any of claims 1 to 12, **characterised in that** the adjustment elements (17) include an adjustment buckle (18).

14. Arrangement according to any of claims 1 to 13, **characterised in that** the position of the support component (23) is arranged to be adjustable in the lateral direction of the frame construction (21).

## Patentansprüche

1. Anordnung in einem Fahrzeugsitz, in dem eine Stützvorrichtung (10) in Verbindung mit einem Sitz (12) eines Fahrzeugs (11) montiert ist, und die Anordnung zwei separate Stützvorrichtungen (10) einschließt, die mit einem Abstand voneinander angepasst sind, und die Stützvorrichtung (10) ein Stützelement (13) und Befestigungsvorrichtungen (14) einschließt, mit denen das Stützelement (13) in Verbindung mit einer im Sitz (12) eingeschlossene Rückenlehne (15) befestigt ist, und die Befestigungsvorrichtungen (14) ein Befestigungselement (16) einschließen, welches mit Anpassungselementen (17) zum Variieren der Länge des Befestigungselements (16) versehen ist, und wobei das Stützelement (13) als seitliche Stütze angeordnet ist, und die Stützvorrichtungen (10) spiegelähnliche Konstruktionen sind, die lösbar in Verbindung mit dem Sitz (12) montiert sind, **dadurch gekennzeichnet, dass** die Befestigungsvorrichtungen (14) Verankerungselemente (35) an beiden Enden des Stützelements (13) einschließen, einschließlich einer länglichen Rahmenkonstruktion (21), und das Verankerungselement (35) für den unteren Teil des Stützelements (13) schnell-lösbar ist, und in dem Stützelement (13) zwei Stützkomponenten (23) angeordnet sind; eine Stützkomponente für den Kopf und eine andere Stützkomponente für den Körper des Passagiers.

2. Anordnung nach Anspruch 1, **dadurch gekennzeichnet, dass** das Verankerungselement (35) für den oberen Teil des Stützelements (13) aus einem Befestigungsprofil (36) besteht, welches der Form der Rückenlehne (15) entspricht.

3. Anordnung nach Anspruch 1 oder 2, **dadurch gekennzeichnet, dass** das Verankerungselement (35) für den unteren Teil des Stützelements (13) aus einem Verankerungselement (19) besteht, welches der ISO-Norm 13216 entspricht.

4. Anordnung nach einem der Ansprüche 1 bis 3, **dadurch gekennzeichnet, dass** die Stützkomponenten (23) formschlüssig in der Rahmenkonstruktion (21) verriegelt werden.

5. Anordnung nach Anspruch 4, **dadurch gekennzeichnet, dass** der Formschluss mehrere der Form der Stützkomponente (23) entsprechende Verriegelungsprofile (41) einschließt, die in Längsrichtung der Rahmenkonstruktion (21) in einem Abstand zueinander montiert sind.

6. Anordnung nach einem der Ansprüche 1 bis 5, **dadurch gekennzeichnet, dass** die Stützkomponente (23) ein steifes Innenteil (28) und eine als ein Kissen (29) angeordnete Abdeckung (30) einschließt.

7. Anordnung nach einem der Ansprüche 1 bis 6, **dadurch gekennzeichnet, dass** die Stützkomponente (23) mit einem oder mehreren Lautsprechern (46) versehen ist.

8. Anordnung nach einem der Ansprüche 1 bis 7, **dadurch gekennzeichnet, dass** die Stützkomponente (23) mit einem Mikrofon versehen ist.

9. Anordnung nach einem der Ansprüche 1 bis 8, **dadurch gekennzeichnet, dass** die Anordnung ein Sitzpolster (32) einschließt, das an den Befestigungsvorrichtungen (14) gesichert ist.

10. Anordnung nach einem der Ansprüche 1 bis 9, **dadurch gekennzeichnet, dass** die Stützkomponenten (10) unabhängig voneinander positioniert sind.

11. Anordnung nach einem der Ansprüche 1 bis 10, **dadurch gekennzeichnet, dass** das Verankerungselement (35) für den oberen Teil des Stützelements (13) aus einem Befestigungselement (39) besteht, welches dem in der Rückenlehne (15) eingeschlossenen Verankerungsstab (38) der Kopfstütze (33) entspricht.

12. Anordnung nach Anspruch 11, **dadurch gekennzeichnet, dass** das Verankerungselement (35) für den oberen Teil des Stützelements (13) ein Passelement (40) zum Anpassen des Verankerungselements (35) an die Rückenlehne umfasst.

13. Anordnung nach einem der Ansprüche 1 bis 12, **dadurch gekennzeichnet, dass** die Anpassungselemente (17) eine Anpassungsschnalle (18) einschließen.

14. Anordnung nach einem der Ansprüche 1 bis 13, **dadurch gekennzeichnet, dass** die Position der Stützkomponente (23) dergestalt angeordnet ist, dass sie in seitlicher Richtung der Rahmenkonstruktion (21) anpassbar ist.

## Revendications

1. Agencement dans un siège de véhicule, dans lequel un dispositif de support (10) est disposé en connexion avec un siège (12) de véhicule (11), et l'agencement inclut deux dispositifs de support distincts (10), qui sont adaptés à un certain intervalle les uns des autres, et le dispositif de support (10) inclut un élément de support (13) et des dispositifs d'attache (14), avec lesquels l'élément de support (13) est attaché en connexion avec un dossier (15) inclus dans le siège (12), et les dispositifs d'attache (14) incluent un élément d'attache (16) fourni avec des éléments d'ajustement (17) pour ajuster la longueur de l'élément d'attache (16), et l'élément de support (13) étant agencé en tant que support latéral, et les dispositifs de support (10) sont des constructions en miroir disposées de façon amovible en connexion avec le siège (12), **caractérisé en ce que** les dispositifs d'attache (14) incluent des membres d'ancrage (35) aux deux extrémités de l'élément de support (13), y compris une construction sous la forme d'un cadre allongé (21), et le membre d'ancrage (35) pour la partie inférieure de l'élément de support (13) est facilement libéré rapidement et, dans l'élément de support (13), deux composants de support (23) sont disposés ; un composant de support pour la tête et un autre composant de support pour le corps du passager.

2. Agencement conformément à la revendication 1, **caractérisé en ce que** le membre d'ancrage (35) pour la partie supérieure de l'élément de support (13) est composé d'un profil d'attache (36) adapté à la forme du dossier (15).

3. Agencement conformément à la revendication 1 ou 2, **caractérisé en ce que** le membre d'ancrage (35) pour la partie inférieure de l'élément de support (13) est composé d'un membre d'ancrage (19) conformément à la norme ISO n° 13216.

4. Agencement conformément à l'une quelconque des revendications 1 à 3, **caractérisé en ce que** les composants de support (23) sont verrouillés par la forme dans la construction du cadre (21).

5. Agencement conformément à la revendication 4, **caractérisé en ce que** le verrouillage par la forme inclut plusieurs profils de verrouillage (41) s'adaptant à la forme du composant de support (23), ajustés à un certain intervalle les uns des autres dans la direction longitudinale de la construction du cadre (21).

6. Agencement conformément à l'une quelconque des revendications 1 à 5, **caractérisé en ce que** le composant de support (23) inclut une partie intérieure rigide (28) et une housse (30) disposées comme un coussin (29).

7. Agencement conformément à l'une quelconque des revendications 1 à 6, **caractérisé en ce que** le composant de support (23) est fourni avec un ou plusieurs haut-parleur (s) (46).

8. Agencement conformément à l'une quelconque des revendications 1 à 7, **caractérisé en ce que** le composant de support (23) est fourni avec un microphone.

9. Agencement conformément à l'une quelconque des revendications 1 à 8, **caractérisé en ce que** l'agencement inclut un coussin de siège (32), qui est fixé aux dispositifs d'attache (14).

10. Agencement conformément à l'une quelconque des revendications 1 à 9, **caractérisé en ce que** les dispositifs de support (10) sont positionnés indépendamment les uns des autres.

11. Agencement conformément à l'une quelconque des revendications 1 à 10, **caractérisé en ce que** le membre d'ancrage (35) pour la partie supérieure de l'élément de support (13) est composé d'un élément d'attache (39) s'adaptant à la tige d'ancrage (38) de l'appuie-tête (33) inclus dans le dossier (15).

12. Agencement conformément à la revendication 11, **caractérisé en ce que** le membre d'ancrage (35) pour la partie supérieure de l'élément de support (13) inclut un élément d'ajustement (40) pour l'adaptation du membre d'ancrage (35) au dossier.

13. Agencement conformément à l'une quelconque des revendications 1 à 12, **caractérisé en ce que** les éléments d'ajustement (17) incluent une boucle d'ajustement (18).

14. Agencement conformément à l'une quelconque des revendications 1 à 13, **caractérisé en ce que** le composant de support (23) est positionné de façon à être ajustable dans la direction latérale de la construction du cadre (21).
